Europäisches Patentamt

(19) European Patent Office

Office européen des brevets

(11) Publication number: **0 064 580**
**A1**

## EUROPEAN PATENT APPLICATION

(21) Application number: **81302102.9**

(22) Date of filing: **12.05.81**

(51) Int. Cl.³: **A 01 F 17/02**
**A 01 F 15/08, A 01 D 75/04**

(43) Date of publication of application:
**17.11.82** Bulletin **82/46**

(84) Designated Contracting States:
**AT BE CH DE FR GB IT LI LU NL SE**

(71) Applicant: **Saunders, Patrick George**
**Step Farm**
**Faringdon Oxfordshire(GB)**

(72) Inventor: **Saunders, Patrick George**
**Step Farm**
**Faringdon Oxfordshire(GB)**

(74) Representative: **Jackson, John Timothy et al,**
**MEWBURN ELLIS & CO. 2/3 Cursitor Street**
**London EC4A 1BQ(GB)**

(54) **Bale discharge device.**

(57) A bale discharge device (12) has top and side walls (14, 16, 18a, 18b) between which are received two bales in succession longitudinally, where they are held by ribs (42) on the side walls until discharged by outward hinging of at least one of the side walls. The hinged side wall is normally held closed by a device (60, 62, 64, 66) which is released when engaged by the rearwardly moving rearmost bale, allowing the two bales to drop to the ground still in end-to-end configuration, whereafter the hinged wall returns to its original position.

FIG.3

EP 0 064 580 A1

Croydon Printing Company Ltd.

0064580

## BALE DISCHARGE DEVICE

This invention relates to agricultural baling of straw, hay and the like, and more particularly to the handling of bales on discharge from the baler.

Various bale handling devices are known and in common use. One such device is a bale accumulator which is towed behind the baler and by means of diverter gates collects bales into sets, usually a set of eight consisting of two transverse rows of four bales. The flat set of eight bales can then be picked up by a special front end loading device mounted on the hydraulic lift of a tractor. Such bale accumulators have, however, become rather elaborate and expensive, and the present invention therefore seeks to provide a simpler bale discharge device which can, nonetheless, be used in accordance with conventional bale handling practice.

A set of eight bales produced by conventional accumulator consisting, as indicated above, of two transverse rows of four bales, can alternatively be regarded as four longitudinal rows of two bales each. If a bale discharge device provides just a single longitudinal row of two bales, a tractor front end pick-up device can pick up four such rows of bales in succession to accumulate a complete set of eight bales. In other words, the tractor will make four stops, picking up two bales at each stop, rather than a single stop to pick up eight bales. However, since the pairs of bales will normally be more or less aligned across the field, this need not involve substantial additional time or travelling distance, and the much simpler and less expensive bale discharge device will be less expensive and may be less liable to breakdown.

Bale discharge devices on variations of this principle can be seen from UK Patents Nos. 819287, 724771, 870802 and 986492. However, in 819287 the bales are dropped one after another, not together. In the other three patents, the bales are dropped by causing them to tilt or overbalance to one side from a horizontal ledge or platform, tumbling them through 90°. This means they may not be left in alignment, so that they are difficult to pick up later on.

A bale accumulator for accumulating a set of eight bales can be seen from my UK Patent No. 1349747.

According to the present invention there is provided a bale discharge device for attachment to the discharge end of the baler and having a substantially horizontal passage to receive a succession of bales moving lengthwise from the discharge end of the baler, means for supporting the bales within the passage while allowing them to pass along the passage, said supporting means being displaceable to allow a plurality of bales accumulated end-to-end in the passage to fall therefrom to the ground below in substantially the same end-to-end configuration. The bottom of the passage is preferably open, the supporting means being provided on opposite side members defining the passage. One or both of the side members with the associated supporting means may be movable to release the accumulated bales. The side member or members may be movable under the weight of the bales, means being provided for releasing the side member or members from a locked condition, the movable side member or members being adapted to return to and relock in the original position after release of the bales. The bale release may be produced by the leading bale engaging an operating element at a distance along the passage from the discharge end of the baler corresponding substantially to the combined length of the desired number of bales to be accumulated in the passage. This number of bales is preferably two, but could be more than two if desired.

In order that the invention may be more clearly understood, one embodiment will now be described with reference to the accompanying drawings, wherein:

Fig. 1 shows a perspective view of one embodiment of bale discharge device, and

Fig. 2 shows an end view of a modified form of bale discharge device.

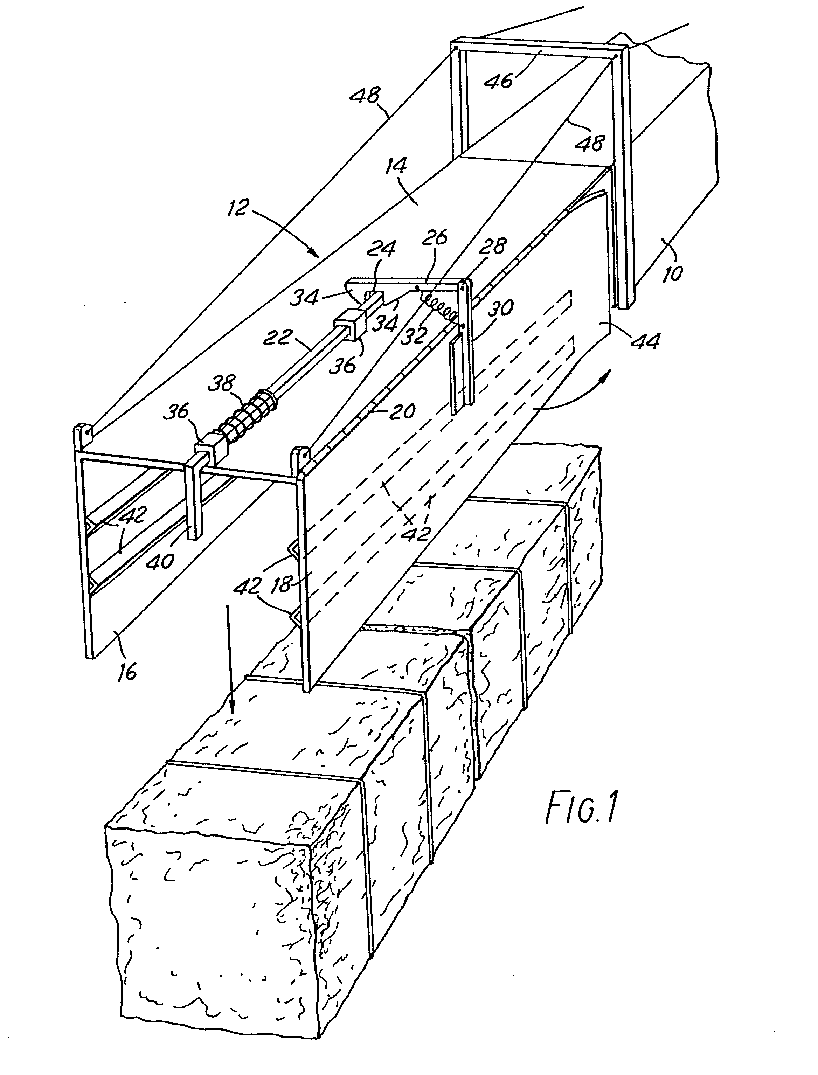

Referring to the drawings, and firstly to Fig. 1; to the discharge end 10 of the baler there is mounted a bale discharge device 12, comprising a top panel 14 and opposite side wall panels 16,18 respectively, defining a longitudinal passage which is a linear extension of the baler discharge outlet. The bottom of the passage is open. The side wall panel 16 is fast with the top panel 14 and at right angles thereto, but the side wall panel 18 is hinged at 20 to the top panel 14. lt is located normally at right-angles to the top panel by means of a locking rod 22 on the top panel 14, one end of which rod engages in a recess 24 in a latch arm 26 pivotally connected at 28 to an upward extension 30 of the side panel 18. The latch arm 26 is biassed downwardly onto the rod by means of a spring 32, and is provided with ramp surfaces 34 adjacent the recess 24 so that it will latch automatically onto the rod 22 when the side wall panel 18 is hinged. The rod 22 is longitudinally slidable in sleeves 36 against a spring 38 so that it can be withdrawn from engagement with the latch arm 26. A downward extension 40 of the rod at the end of the passage provides a trigger by means of which the leading bale passing along the passage can move the rod against the spring to release the side wall panel 18. The side wall panels 16,18 are provided with longitudinally extending ribs 42 on their inside surfaces which bite into the sides of a bale to support the bale within the passage while allowing it to move along the passage (i.e. longitudinally of the ribs). Preferably the ribs are inclined slightly upwardly towards the outer end of the passage (i.e. the end remote from the discharge outlet 10 of the baler) so as to counteract any tendency for the bales to slip downwards as they move along the passage. The width of the passage between the side walls 16,18 is the same as that of a bale, or slightly less; and to ensure that the bales move smoothly from the discharge end of the baler into the passage, the end of the side wall 18 is slightly flared outwardly at 44. Also, this end of the side wall 18 terminates a little short of the discharge end of the baler so as to allow the side wall panel 18 to resume its original position even if part of a following bale is emerging from the discharge end of the baler. The discharge device can be mounted to the discharge end of the baler by any convenient means, but as shown by way of example an upstanding inverted U-shaped frame 46 on the end of the baler carries wires 48 extending on either side to the baler and to the discharge device respectively so as to support the discharge device in a cantilever fashion.

In operation, bales emerge from the discharge end of the baler into the passage of the discharge device and are supported within the passage by the ribs 42 as they move along the passage. The length of the passage is substantially that of two bales, so that two bales will have been accumulated end-to-end within the passage by the time the leading bale reaches the trigger 40 and releases the side wall 18, thereby allowing the two bales to fall to the ground, still in their end-to-end configuration. Once the bales have fallen, the side wall 18 will swing back to the vertical position, and the latch arm 26 will re-engage the rod which has also returned to its former position.

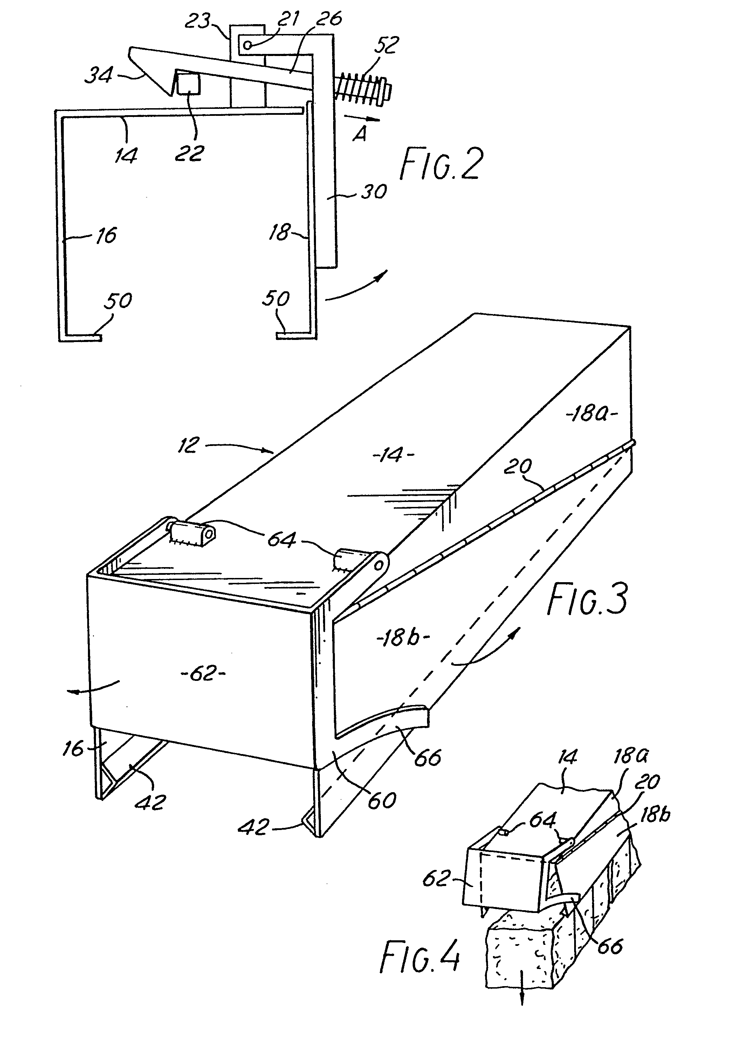

Fig. 2 shows mutually independent modifications of the embodiment shown in Fig. 1. Instead of the ribs 42, mutually inwardly directed flanges 50 may be provided at the bottom ends of the walls to support the bales. Instead of the side wall 18 being hinged to the edge of the top panel 14, it may be hinged at 21 to support bracket 23 projecting upwardly from the top panel 14. The hinge axis 21 is above the panel 14 and intermediate its longitudinal edges. The result is that the side wall panel 18 will be returned more strongly under gravity to its original position, the edge of the top panel 14 providing a stop determining the limit of inward swing of the side wall. The latch arm 26 in this case will only need one ramp surface 34 providing a single shoulder for engagement with the rod 22. Furthermore, the latch arm, instead of being pivotally mounted to the side wall 18 can pass freely through an aperture in the side wall and be biassed in one direction (see arrow A) by a spring 52. This spring allows some resilient outward displacement of the side wall 18, thus allowing for small variations in the width of the bales, the spring being of course sufficiently strong to retain the bales within the passage.

The bale discharge device could be arranged to accumulate more than two bales end-to-end if desired. Also, instead of having just one side wall(or support) displaceable, the side walls (or supports) on both sides of the bales could be displaceable to release them.

In another embodiment, shown in Figs. 3 and 4, the side wall panel 18, instead of being hinged to the top panel 14, is formed in two parts, the upper part 18a being fast with the top panel and the lower part 18b being hinged to the part 18a along a hinge 20 which extends from a point adjacent the top panel at the rear end of the discharge device to a point lower down at the forward end of the device. Thus the part 18a is substantially triangular and the part 18b trapezoidal. The lower edges of the two side walls are provided with triangular section ribs 42 of angle iron welded to the side wall panels, thereby providing sloping upper surfaces on which the bales rest and are supported when the lower side wall part 18b is closed, but which act, when the part 18b is released, to cam the the lower side wall part outwardly under the weight of the bales. The substantial area of fixed upper side wall part 18b, at the forward end, together with the fixed side wall 16, help to guide the following bale as it emerges from the baler during the short time the lower side wall part is released to drop the previous two bales.

In this embodiment the lower side wall part 18b is normally held closed by an arm 60 which extends alongside the outside surface of the part 18b. The arm 60 is fast with a rear gate 62 which is hinged at 64 for swinging rearwardly and upwardly (as indicated by an arrow in Fig.3) when it is engaged by the rearwardly moving bale. This movement, shown in Fig. 4, causes the arm 60 to move rearwardly. A forward extension 66 of the arm remains slidingly alongside the panel part 18b but is curved outwardly to allow the part 18b to hinge outwardly to a small degree as the gate 62 hinges rearwardly. This is sufficient to release the bales, and after they have dropped the panel part 18b returns to its former position and the gate 62 does likewise.

If desired, both walls 16 and 18 could be formed with hinged lower parts, and the gate 62 would therefore be provided with arms 60/66 on both sides.

The gate and arm closure and release device and the two part side wall arrangement of Figs.3 and 4 are mutually independent. Thus, for example, either could independently be used in place of the corresponding arrangement in Figs. 1 and 2.

As well as being a simple and relatively inexpensive structure, the present bale discharge device is supported clear of the ground, so that the tractor pulling the baler does not lose speed or waste power in dragging a conventional bale accumulator and bales over the ground. The bales are dropped vertically downwards, rather than tumbling to one side. In Fig. 2, the ledge 50 on the side panel 16 should not project so far as to prevent this vertical dropping, though the panel 18 will prevent tumbling in any case.

CLAIMS:

1. A bale discharge device for attachment to the discharge end (10) of the baler and having a substantially horizontal passage (14,16,18) to receive a succession of bales moving lengthwise from the discharge end of the baler, means (42,50) for supporting the bales within the passage while allowing them to pass along the passage, said supporting means being displaceable to allow a plurality of bales accumulated end-to-end in the passage to fall therefrom to the ground below in substantially the same end-to-end configuration, characterised in that the supporting means is displaceable so as to allow the bales to fall vertically downwards.

2. Bale discharge device according to claim 1 wherein the bottom of the passage is normally open, the supporting means being provided on opposite side members(16,18) defining the passage.

3. Bale discharge device according to claim 2 wherein one or both of the side members (16,18) with associated supporting means are movable to release the accumulated bales.

4. Bale discharge device according to claim 3 wherein the side member or members are movable under the weight of the bales, means (26,22; 60) being provided for releasing the side member or members from a locked condition, the movable side member or members being adapted to return to and relock in the original position after release of the bales.

5.    Bale discharge device according to claim 4 wherein the bale release is produced by the leading bale engaging an operating element (40,62) at a distance along the passage from the discharge end of the baler corresponding substantially to the combined length of the desired number of bales to be accumulated in the passage.

6.    Bale discharge device according to claim 5 wherein the operating element is connected to a retaining arm (60,66) extending alongside the outside of the or each movable side member, the arm being shaped so as to remain alongside its respective movable side member as the arm is displaced as a result of engagement of the operating element with the leading bale but to allow as a result of said displacement limited movement of the side member to release the bales.

7.    Bale discharge device according to any one of claims 4,5 and 6 wherein the supporting means (42) comprises a sloping upper surface arranged so that the weight of the bales leaning on said surface urges the movable side member or members into a bale discharge position.

8.    Bale discharge device according to any of claims 4 to 7 wherein the or each movable side member takes the form of a lower portion (18b) of a side wall of the passage hinged to the upper portion (18a) of the side wall along a hinge line (20) which extends from a point at or near the top of the passage at the rear end of the passage to a point remote from the top of the passage at the front end of the passage nearest the baler outlet.

0064580

FIG.1

FIG.2

FIG.3

FIG.4

**European Patent Office**

**EUROPEAN SEARCH REPORT**

EP 81 30 2102.9

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>FR - A - 1 229 966</u> (R. JAGER)<br>* entire document *<br>-- | 1-5 | A 01 F 17/02<br>A 01 F 15/08<br>A 01 D 75/04 |
| | <u>FR - A1 - 2 309 132</u> (G. BELLIER)<br>* page 1; fig. *<br>-- | 1 | |
| D | <u>GB - A - 819 287</u> (J.F. LUNNON)<br>* page 1, lines 39 to 83; fig. 1, 2, 5 *<br>-- | 1 | |
| D | <u>GB - A - 870 802</u> (P.F. PARKER et al.)<br>* page 1, lines 28 to 41; fig. 1 to 3 *<br>-- | 1 | **TECHNICAL FIELDS SEARCHED (Int. Cl.³)** |
| D | <u>GB - A - 986 492</u> (J.H. TAYLOR)<br>* fig. 1, 2 *<br>-- | 1 | A 01 D 75/04<br>A 01 D 85/00<br>A 01 D 87/12<br>A 01 F 15/08<br>A 01 F 17/00 |
| D | <u>GB - A - 1 349 747</u> (P.G. SAUNDERS)<br>* claim 1; fig. 1, 2 *<br>---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 30-11-1981 | SCHOFER |